# FASCICULE DE BREVET EUROPEEN

(11) **EP 1 140 412 B1**
(45) Date de publication et mention de la délivrance du brevet: **04.08.2004**
(21) Numéro de dépôt: 99957358.7
(22) Date de dépôt: 03.12.1999
(51) Int. Cl.: B23K 10/00

(54) **PROCEDE D'OXYCOUPAGE AVEC PRECHAUFFAGE PAR PLASMA DE MATERIAUX FERREUX, TELS LES ACIERS DE CONSTRUCTION**
VERFAHREN ZUM BRENNSCHNEIDEN VON EISENMATERIALEN Z.B. BAUSTAHL MIT PLASMAVORHEIZUNG
OXYGEN ARC CUTTING WITH PLASMA PRE-HEATING OF FERROUS MATERIALS, SUCH AS STRUCTURAL STEEL WORKPIECES

(30) Priorité: 22.12.1998 FR 9816240
(43) Date de publication de la demande: 10.10.2001
(73) Titulaire: LA SOUDURE AUTOGENE FRANCAISE, F-75321 Paris Cedex 07 (FR); L'air Liquide, S.A. à Directoire et Conseil de Surveillance pour l'Etude et l'Exploitation des Procédés Georges Claude, 75321 Paris Cedex 07 (FR)
(72) Inventeur: DELZENNE, Michel, F-95130 Franconville (FR); AUGERAUD, Régis, F-95300 Pontoise (FR)
(74) Mandataire: Pittis, Olivier
(86) Numéro de dépôt international: PCT/FR1999/003002
(87) Numéro de publication internationale: WO 2000/037207

(56) Documents cités:
- EP-A- 0 790 756
- DE-A- 2 505 665
- US-A- 5 801 355

## Description

La présente invention concerne une installation et un procédé de découpe des métaux ferreux, en particulier des aciers de constructions, mettant en oeuvre un préchauffage localisé du métal par un flux de plasma délivré par une torche à piasma et un coupage du métal par un flux gazeux oxydant sous pression, tel un flux d'oxygène de coupe, délivré par une buse de distribution ou analogue.

Actuellement, on connaît plusieurs procédés de découpe thermique automatisée des métaux, lesquels sont utilisés depuis de nombreuses années à l'échelle industrielle.

A titre d'exemples, on peut citer l'oxycoupage, le coupage plasma et le coupage laser, notamment des aciers de construction.

Ces procédés sont basés sur la fusion ponctuelle, selon toute l'épaisseur, du matériau à découper et sur le déplacement du front de fusion selon une trajectoire qui définit la forme de la découpe ou saignée devant être réalisée à travers le matériau à couper.

Ces différents procédés ne peuvent pas réellement être considérés comme des procédés concurrents car ils se distinguent, les uns des autres, par des performances de coupes et des coûts de mise en oeuvre et d'exploitation différents.

Ainsi, la technique de l'oxycoupage est connue pour sa capacité à couper industriellement des épaisseurs d'acier de construction allant de 3 mm à 300 mm et à atteindre, dans des cas d'application plus rares, des épaisseurs pouvant aller jusqu'à 2000 mm.

Dans ce cas, bien que le coût de l'outil de découpe, c'est-à-dire du chalumeau, soit peu élevé, un procédé d'oxycoupage présente notamment l'inconvénient d'une lenteur globale excessive.

A l'inverse, le coupage plasma est connu pour son aptitude à couper n'importe quel type de matériau métallique avec une productivité très élevée.

Cependant, le coût de l'outil de découpe, à savoir de l'ensemble constitué de la torche plasma et du générateur de courant, est habituellement de 30 à 50 fois plus élevé que dans le cas précédent, à savoir en oxycoupage.

Par ailleurs, le coupage laser CO₂ est connu pour produire des qualités de coupe excellentes, surtout sur des épaisseurs inférieures à 10 mm, c'est-à-dire dans un domaine d'épaisseurs où le procédé laser est également productif.

Par contre, le coût de l'outil de découpe, à savoir de l'ensemble constitué de la tête laser et de la source laser CO₂, est, là encore, de 200 à 300 fois plus élevé que dans le cas de l'oxycoupage.

Plus généralement, la technique d'oxycoupage est basée sur l'utilisation de l'énergie thermique générée par la combustion du fer, associée à l'énergie cinétique du jet d'oxygène qui permet l'éjection hors de la saignée de coupe des oxydes produits durant ladite coupe.

Or, la combustion du fer nécessite la présence de flammes de préchauffage pour s'amorcer et s'entretenir ensuite correctement.

Pour ce faire, les chalumeaux d'oxycoupage sont classiquement équipés, à leur extrémité inférieure, d'une tête de coupe ou buse de distribution, d'une forme généralement cylindrique, comportant un canal central de distribution de l'oxygène de coupe entouré à distance d'une couronne de canaux de distribution d'un mélange de gaz combustible et comburant destinés à former une flamme de chauffe ou de préchauffage périphérique au jet central d'oxygène de coupe.

Une opération d'oxycoupage peut être schématisée par un cycle comportant les étapes suivantes :
(a) ouverture par un opérateur des robinets des gaz combustible et comburant alimentant les orifices de chauffe de la tête de coupe,
(b) allumage du chalumeau de coupe, soit de façon manuelle au moyen, par exemple d'une flamme de briquet présentée à la sortie des orifices de chauffe de la tête de coupe, sort de façon automatique, par exemple à l'aide d'un quartz piézo-électrique permettant de créer une étincelle qui allume une veilleuse à gaz et dont la flamme ainsi obtenue est dirigée en direction des orifices de chauffe de la tête de coupe, de manière à allumer à son tour la flamme de chauffe du chalumeau,
(c) réglage des débits de gaz combustible et comburant, par l'intermédiaire de robinets agencés sur le chalumeau, de manière à obtenir une flamme au rapport stoechiométrique choisi ou correspondant aux prescriptions techniques du fabriquant du chalumeau,
(d) présentation du chalumeau au point d'amorçage requis sur la pièce à couper,
(e) chauffage local de la pièce à couper jusqu'à atteindre une température suffisante, classiquement de l'ordre de 1300°C dans le cas d'une pièce en acier de construction, pour que la réaction fer-oxygène puisse s'initier et s'entretenir,
(f) ouverture de l'oxygène de coupe,
(g) perçage de la pièce selon toute son épaisseur,
(h) mise en mouvement du chalumeau par l'intermédiaire des axes de la machine de coupage et exécution de la découpe selon une ou plusieurs trajectoires programmées,
(i) fin de la coupe avec arrêt de l'alimentation en gaz du chalumeau pour arrêter le débit d'oxygène de coupe et la chauffe ou, le cas échéant, coupure du débit d'oxygène de coupe et maintien de la chauffe pour aller positionner le chalumeau sur un nouveau point d'amorçage.

Cependant, la productivité des procédés d'oxycoupage est généralement pénalisée par une faible vitesse de propagation du front de combustion du fer entrant dans la composition du matériau à découper et aussi par les temps relativement élevé de préparation à la découpe proprement dite, c'est-à-dire le temps de réglage de la flamme de chauffe et le temps de chauffage local de la pièce pour parvenir à la température propice à la réaction d'oxy-combustion du fer.

Ainsi, du fait d'une faible densité de puissance de chauffe déposée sur la pièce, le temps nécessaire pour porter le matériau à la température requise est généralement de 5 à 20 secondes et peut atteindre, dans des cas extrêmes, des durée atteignant jusqu'à environ 1 minute.

De plus, cette phase de chauffe suivie du déclenchement de la réaction d'oxycombustion est difficilement automatisable du fait d'une prédictibilité peu précise du temps nécessaire pour atteindre les bonnes conditions d'amorçage de la réaction.

En effet, les facteurs qui sont susceptibles d'influer sur ce temps sont notamment la masse de la pièce, la conductivité thermique de la nuance du matériau à chauffer, l'état de surface du matériau, c'est-à-dire, par exemple, la présence éventuelle de calamine, de graisse, de peinture ou d'un autre revêtement sur ce matériau, mais également d'autres facteurs liés à la chaleur spécifique des gaz utilisés pour la chauffe, ainsi que leur rapport de mélange.

Dans la pratique, le plus souvent, l'opérateur surveille attentivement l'opération de chauffage et déclenche manuellement l'ouverture de l'oxygène de coupe lorsque des conditions adéquates d'amorçage de la réaction d'oxy-combustion lui semblent réunies.

Cette pratique conduit parfois à des "ratés" d'amorçage, c'est-à-dire à des amorçage inefficaces ou imparfaits, parce que la température du matériau est insuffisante ou parfois, à l'inverse à des allongements excessifs du temps de chauffe, par sécurité, pour être certains que l'amorçage se fasse bien.

Par ailleurs, le document EP-A-790 756 décrit l'utilisation d'un jet plasma en combinaison avec un jet gazeux oxydant. Le gaz oxydant a pour fonction d'optimiser l'angle et les autres paramètres de coupe, alors que le jet plasma sert à obtenir principalement l'effet de découpe. Le flux de gaz oxydant est initié bien avant l'établissement du jet plasma.

De là, le problème qui se pose est d'éviter ou minimiser les amorçages inefficaces ou imparfaits et d'augmenter la productivité des procédés d'oxycoupage par, notamment, une réduction des temps préparatoires à l'opération de découpe proprement dite et ce, de préférence, avec automatisation effective de l'ensemble du processus.

La solution proposée par la présente invention repose sur le couplage d'un procédé d'oxycoupage à un procédé de chauffage par jet ou flux de plasma, et de son équipement de mise en oeuvre.

La présente invention concerne alors un procédé d'oxycoupage-plasma d'au moins une pièce métallique contenant au moins un matériau ferreux, en particulier du fer, dans lequel :
(a) on réalise un préchauffage localisé d'une zone d'amorçage de la pièce métallique à couper en soumettant ladite zone d'amorçage à au moins un jet de plasma ;
(b) on soumet au moins une partie de la zone d'amorçage au moins préchauffée à l'étape (a) à au moins un flux gazeux oxydant à une pression supérieure à 10⁵ Pa ;
(c) on réalise au moins un perçage selon toute l'épaisseur de la pièce à découper, dans au moins une partie de la zone d'amorçage soumise au moins au préchauffage par jet de plasma selon l'étape (a), par fusion et/ou par combustion du matériau ferreux contenu dans ladite pièce métallique par réaction dudit matériau ferreux avec ledit flux gazeux oxydant et/ou ledit jet de plasma ;
(d) on déplace le jet de plasma et le flux gazeux oxydant suivant une trajectoire de coupe pour réaliser au moins une partie, c'est-à-dire au moins une portion d'une saignée de coupe à travers ladite pièce par fusion et/ou par combustion du matériau ferreux contenu dans ladite pièce métallique au moins par réaction dudit matériau ferreux avec au moins ledit flux gazeux oxydant.

Selon le cas, le procédé selon l'invention peut comprendre l'une ou plusieurs des caractéristiques suivantes :
- le perçage réalisé à l'étape (c) est obtenu par réaction du matériau ferreux avec au moins ledit flux gazeux oxydant. Dans ce premier cas, c'est essentiellement le flux de gaz oxydant qui est utilisé pour percer la pièce métallique et le jet de plasma ne sert, d'une part, qu'à préchauffer la zone d'amorçage et éventuellement à obtenir un début de fusion et/ou combustion du fer contenu dans le matériau constituant la pièce métallique et, d'autre part à entretenir le flux oxydant de combustion.
- le perçage réalisé à l'étape (c) est obtenu par réaction du matériau ferreux avec ledit jet de plasma. Dans ce deuxième cas, c'est le jet de plasma qui est utilisé non seulement pour préchauffer la zone d'amorçage mais aussi pour percer la pièce métallique par fusion et/ou par combustion du fer contenu dans le matériau constituant la pièce métallique et sert ensuite, comme dans le premier cas, à entretenir le flux oxydant de combustion.
- la zone d'amorçage est préchauffée à l'étape (a) à une température comprise entre 1000°C et 1500°C, de préférence de 1200°C à 1400°C, de préférence encore de l'ordre de 1300°C à 1350°C.
- la durée du préchauffage est comprise entre 0.001 et 2 secondes, de préférence de 0.01 et 1.5 seconde.
- la pression du flux gazeux oxydant est réglée ou ajustée en fonction de l'épaisseur à couper et/ou de l'énergie de chauffe générée par le jet de plasma.
- le débit de gaz oxydant est supérieur à 1 l.min⁻¹, de préférence le débit du flux gazeux oxydant est réglé ou ajusté en fonction de l'épaisseur à couper et/ou de l'énergie de chauffe générée par le jet de plasma
- le flux gazeux oxydant est de l'oxygène ou un mélange gazeux contenant de l'oxygène, notamment de l'air.
- la fusion et/ou la combustion du matériau ferreux par le flux gazeux oxydant est localisée à au moins une partie de la zone d'amorçage.
- durant la coupe, chaque portion de la trajectoire de coupe est soumise au jet de plasma et au flux gazeux oxydant, l'essentiel de la fusion et/ou de la combustion du matériau selon ladite trajectoire de coupe étant assuré principalement par réaction du fer avec le flux gazeux oxydant.
- le jet de plasma et le flux gazeux oxydant sont délivrés coaxialement ou de manière convergente.
- la saignée de coupe est réalisée par déplacement à une vitesse de coupe approximativement constante desdits jet de plasma et flux gazeux oxydant, de préférence à une vitesse de coupe qui est fonction de l'épaisseur à couper, du débit de gaz et/ou de la pression de gaz, par exemple une vitesse de coupe de l'ordre de 0 6 m.min-1 pour une tôle d'acier ayant une épaisseur de 12 mm.

L'invention concerne également une installation d'oxycoupage-plasma susceptible d'être utilisée pour découper une pièce métallique contenant au moins un matériau ferreux, en particulier du fer, comprenant au moins :
- une torche de préchauffage par jet de plasma d'axe (Zt-Zt) pour délivrer au moins un jet de plasma et une buse de distribution de flux gazeux d'axe (Zb-Zb) pour délivrer au moins un flux gazeux ; l'axe (Zb-Zb) de ladite buse de distribution et l'axe (Zt-Zt) de ladite torche de préchauffage étant dirigés vers un point de convergence de manière à ce que les jets gazeux issus de la buse et de la torche convergent vers ledit point de convergence, de préférence le point de convergence est situé approximativement au niveau ou à proximité de la surface supérieure de la pièce métallique ;
- des moyens bâti-support portant ladite torche de préchauffage par jet de plasma et/ou ladite buse de distribution ;
- des moyens de déplacement pour déplacer, de préférence approximativement en synchronisme, la torche plasma et la buse de distribution relativement à la pièce métallique; et
- des moyens de pilotage permettant de commander au moins les moyens de déplacement et/ou au moins un cycle de fonctionnement de la torche, de préférence les cycles de fonctionnement de la torche, et dans laquelle la torche plasma et la buse de distribution sont d'axes respectifs non-confondus et convergents.

Selon le cas, l'installation selon l'invention peut comprendre l'une ou plusieurs des caractéristiques suivantes :
- une ou plusieurs sources de gaz.
- au moins une source de courant électrique.
- des moyens d'alimentation en fluide de refroidissement, par exemple de l'eau.
- la torche à plasma est de type mono flux ou multi-flux, notamment double flux.
- la torche à plasma est de type à arc soufflé et/ou à arc transféré,
- les moyens de déplacement sont motorisés.
- elle comporte au moins des moyens support de pièce permettant de support et/ou maintenir au moins une pièce métallique à travailler.
- elle comporte, en outre, des moyens de commande des déplacements relatifs entre la torche et/ou la buse, et la pièce à travailler.
- elle comporte, par ailleurs, des moyens d'amenée de la pièce à travailler et/ou d'évacuation de la pièce travaillée, c'est-à-dire après travail de celle-ci.
- elle comprend des moyens de programmation des trajectoires de coupe, des moyens de programmation des trajectoires de transfert d'un programme de coupe à un autre programme de coupe et/ou des des moyens de programmation des séquences d'amorçage et/ou d'extinction de l'installation d'oxycoupage-plasma.

En d'autres termes, selon la présente invention, le moyen de "chauffe" par oxy-combustible, utilisé dans les procédés oxycoupage classiques, est remplacé par un moyen de "chauffe" par jet de plasma.

Le jet de plasma est créé par un arc électrique établi dans un flux gazeux plasmagène entre une première électrode et appartenant au "chalumeau" à plasma, encore appelé torche à plasma, et la pièce à chauffer et à découper formant une deuxième électrode.

Par exemple, l'électrode de la torche ou première électrode est reliée au pôle négatif d'une source de courant continu et la pièce à chauffer et à découper est reliée au pôle positif de ladite source.

De préférence, on utilise, en tant que flux gazeux plasmagène, de l'oxygène ou un gaz oxydant présentant des propriétés de combustion du fer analogues.

Un diaphragme ou tuyère, énergiquement refroidi et comportant un orifice de passage et d'éjection du flux de plasma, est disposé sur le parcours de l'arc plasma, entre la cathode et l'anode, afin d'augmenter la densité de puissance déposée sur la pièce à chauffer/découper par le biais d'une constriction de l'arc plasma au travers dudit orifice.

La puissance de l'arc plasma est réglée de manière à ce que le matériau à chauffer/couper soit porté localement et rapidement à une température voisine de la fusion, c'est-à-dire d'environ 1300°C, sans pour autant être fondu en profondeur par l'impact d'un jet plasma qui serait trop énérgétique.

Ensuite, lorsque la température du matériau ferreux atteind localement une température voisine de la fusion dudit matériau. un jet d'oxygène est envoyé sur la zone ainsi préchauffée afin de déclencher la réaction d'oxy-combustion du fer.

Comme dans le cas d'un procédé d'oxycoupage classique, cette réaction de combustion du fer à caractère très exothermique engendre alors une fusion et une combustion, de proche en proche, du matériau selon toute son épaisseur, avec formation d'une saignée de découpe par expulsion du matériau en fusion sous l'effet de souffle créé par l'énergie cinétique du jet d'oxygène sous pression et ce, selon une trajectoire de coupe déterminée correspondant au déplacement de la torche d'oxycoupage, de préférence à une vitesse régulière et appropriée.

On comprend immédiatement qu'avec un moyen de chauffe dont la température peut atteindre 20 000 K au coeur du jet de plasma et dont la densité de puissance est de l'ordre de 300 kW / cm², le temps nécessaire à l'élévation de température, depuis la température ambiante jusqu'à environ 1300°C, soit beaucoup plus faible qu'avec une flamme oxy-combustible dont la température de flamme n'est que de l'ordre de 3 275 K (cas d'une flamme oxy-acétylènique) et la densité de puissance, à l'impact sur la pièce, seulement de l'ordre de 2 kW / cm².

Ainsi, le temps de chauffe nécessaire, avant amorçage, est de 5 à 20 secondes avec une flamme oxy-combustible alors qu'il est réduit à l'ordre du 1/10^{ème} de seconde lors de la mise en oeuvre d'un préchauffage à l'arc plasma selon la présente invention.

De plus, dans- des conditions optimales d'utilisation du jet de précnauffage plasma, ce temps de chauffe est très peu influencé par la masse, la nuance et l'état de surface du matériau ferreux à chauffer et à découper, ce qui permet alors une gestion automatique relativement aisée de toutes les phases de travail conduisant au découpage final des pièces.

La puissance du jet de plasma peut également être modulée en fonction de la phase de travail. par exemple, la puissance peut être plus élevée lors de la phase de chauffage et d'amorçage que dans la phase de découpe.

Pour faire varier cette puissance, il suffit de piloter la source de courant alimentant la torche, par exemple au moyen d'un microprocesseur, afin que l'intensité du courant délivré dans l'arc plasma soit ajusté en fonction des besoins de la phase du cycle en cours.

De la même façon, la pression et/ou le débit du gaz plasmagène peuvent être ajustés dans ces mêmes phases.

Tous ces ajustements paramétriques peuvent être préprogrammés, notamment lors de l'élaboration du programme de découpe incluant les géométries de pièce, les points ou moments d'amorçages et/ou d'extinction du procédé, les vitesses de découpe...

Cette préprogrammation peut être réalisée directement à partir d'une commande numérique (C.N.C.) adaptée au pilotage de la machine de coupage ou par tout autre moyen de programmation hors ligne.

### Exemple comparatif

Cet exemple comparatif permet d'illustrer le gain de productivité auquel peut conduire le procédé d'oxycoupage avec préchauffage par jet de plasma selon l'invention par rapport à un procédé d'oxycoupage classique sans préchauffage par jet de plasma.

Une pièce-test identique est découpée dans un acier de construction de type E24 ayant une épaisseur de 20 mm, par mise en oeuvre de chacun des procédés susmentionnés.

A chaque fois, l'opération de découpe consiste en la coupe de 25 disques de diamètre 20 mm à l'intérieur de cette pièce-test et d'un périmètre égal à environ 1,5 mètre autour desdits 25 disques.

En d'autres termes, l'opération de coupe se compose d'une découpe de
- 25 disques : soit 25 amorçages et une longueur de coupe d'environ 25 x 0,063 m, et
- 1 périmètre de la pièce-test : soit 1 amorçage et une longueur de coupe d'environ 1,5 m.

L'opération de coupe comprend donc au total : 26 amorçages et envrion 3 m de longueur de coupe.

On admet, pour permettre une comparaison plus aisée, que la vitesse de coupe est la même, lors des essais de mise en oeuvre d'un procédé d'oxycoupage classique et lors des essais de mise en oeuvre d'un procédé oxycoupage-plasma selon la présente invention : dans les deux cas, la vitesse de coupe est égale à 0,60 m.min⁻¹.

Cependant, il convient de souligner que, lors de la mise en oeuvre d'un orocédé oxycoupage-plasma selon la présente invention, l'échauffement du jet d'oxygène de coupe au voisinage du jet plasma peut, dans certains cas, autoriser des vitesses de coupe plus élevées qu'en oxycoupage classique, c'est-à-dire dans le cas d'une flamme oxy-combustible.

De plus, un autre facteur susceptible d'augmenter la vitesse de coupe découle de la concentration de chaleur, à l'impact du jet de plasma sur la pièce. limitant l'expansion latérales de la zone de combustion du fer et produisant des largeurs de saignée plus etroites qu'en oxycoupage classique à la flamme.

En outre, dans le cadre des essais réalisés ici, la durée totale de coupage, hors durée de transfert d'une découpe à l'autre, est égale pour les deux types de procédés testés, à savoir égale à 5 min 13 sec.

Les résultats obtenus sont donnés dans le tableau suivant.

**Tableau**

| Procédé de coupage : | Durée des amorçages | Durée de coupe | Durée totale |
|---|---|---|---|
| Oxycoupage (art antérieur) | 5 min 24 sec | 5 min 13 sec | 10 mm 37 sec |
| Oxycoupage avec préchauffage plasma (invention) | 3 sec | 5 mm 13 sec | 5 min 16 sec |

On constate, au vu du tableau précédent, que le procédé d'oxycoupage avec préchauffage plasma selon l'invention permet d'obtenir un gain de temps d'environ 5 min 21 sec par rapport à un procédé d'xoycoupage selon l'art antérieur.

En d'autres termes, un procédé d'oxycoupage-plasma selon l'invention permet de couper deux fois plus de pièces métalliques, pour une même durée de temps, qu'un procédé d'oxycoupage classique.

L'invention va maintenant être décrite plus en détail à l'aide d'exemples de modes de réalisation schématisés sur les figures annexées, lesquels sont donnés à titre illustratif mais non limitatif.

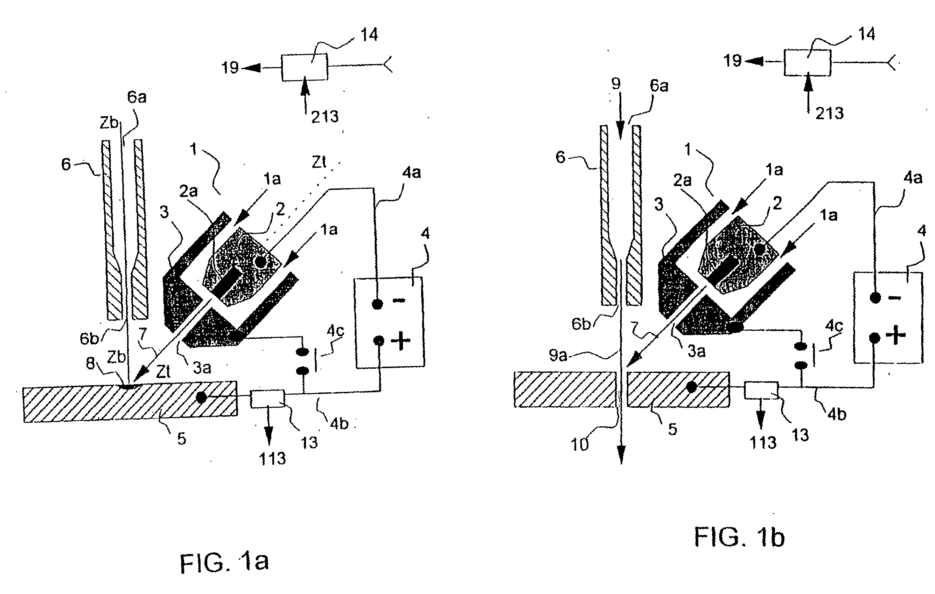

La figure 1a représente un schéma d'un premier mode de réalisation d'une installation selon l'invention du type à jets convergents.

Plus précisément, selon la figure 1a, on voit une torche 1 de préchauffage par jet de plasma comportant une électrode 2 et une tuyère 3.

L'électrode 2, de forme générale de révolution, est réalisée en cuivre ou alliage de cuivre, et est munie à son extrémité aval d'un élément émissif 2a réalisé, par exemple, en hafnium ou alliage d'hafnium.

Par ailleurs, la tuyère 3, aussi de forme générale de révolution, est réalisée en cuivre ou en alliage de cuivre et est munie d'un orifice calibré 3a d'éjection du flux de plasma.

L'axe de l'orifice 3a est coaxial à l'axe de l'électrode 2 et de l'insert émissif 2a.

En outre, ledit orifice 3a peut comporter des aménagements de profil, notamment une stucture de type convergent / col calibré / divergent.

Une section circulaire 1a délimitée, d'une part, par la paroi externe de l'électrode 2 et, d'autre part, par la paroi interne de la tuyère 3 forme un passage pour l'injection d'un gaz dit plasmagène choisi parmi les gaz oxydants, de préférence de l'oxygène.

Un espace est ménagé entre l'extrémité aval de l'électrode 2 portant l'insert émissif 2a et le fond de la tuyère 3, pour permettre au flux gazeux de s'écouler et de sortir par l'orifice 3a de la tuyère 3.

En outre, une source de courant continu 4, tel un générateur de courant, est connectée, d'une part, par son pôle négatif (-) et au moyen d'un câble électrique 4a à l'électrode 2 formant cathode dans la torche 1 et, d'autre part, par son pôle positif (+) et au moyen d'un câble électrique 4b à la pièce métallique à chauffer et à découper 5 formant anode.

Une liaison électrique annexe est établie entre la ligne 4b et la tuyère 3 via un moyen à contact 4c électrique, par exemple un contacteur électrique.

Dans une phase transitoire d'allumage de la torche à plasma 1, le contact 4c est fermé, mettant ainsi la tuyère 3 au potentiel positif de la source 4 et permettant alors l'allumage d'un premier arc, dit arc pilote, établi entre l'électrode 2, 2a et la tuyère 3.

Des moyens d'initiation d'arc-pilote classiques, tels qu'une source auxiliaire de haute fréquence ou un dispositif de mise en court-circuit temporaire de l'électrode 2 et de la tuyère 3 (non représentés sur la figure 1a), sont utilisés pour initialiser cet arc pilote.

Afin de ne pas détériorer le canal de l'orifice 3a de la tuyère 3, un gaz non oxydant, tel de l'argon, est préférentiellement injecté et circule dans l'espace 1a, durant la phase d'allumage de la torche 1, c'est-à-dire tant que l'arc électrqiue n'est pas effectivement transféré à la pièce 5 métallique.

La torche à plasma 1 d'axe (Zt-Zt) est agencée obliquement par rapport au plan supérieur de la pièce de travail 5 de manière à ce que l'axe du jet plasma 7 issu de l'orifice 3a converge, en un point ou une zone du plan supérieur de la pièce de travail 5, avec l'axe (Zb-Zb) d'une buse 6 placée à proximité et selon une direction perpendiculaire audit plan supérieur de la pièce de travail 5.

Les axes (Zt-Zt) et (Zb-Zb) peuvent avantageusement être chacun motorisés et asservis à des systèmes de palpage permettant de maintenir la torche 1 et la buse 6 à des distances respectives du plan supérieur de la pièce 5 sensiblement constantes.

La buse 6, pouvant être réalisée en un matériau métallique et/ou non métallique, telle une céramique, comporte à son extrémité supérieure un premier orifice 6a d'alimentation en gaz oxydant, de préférence de l'oxygène, en communication coaxiale avec un second orifice calibré 6b de diamètre plus petit que le premier orifice et débouchant à l'extrémité aval de la buse 6.

En outre, ledit orifice 6b peut, lui aussi, comporter des aménagements de profil, notamment une stucture de type convergent/col calibré/divergent.

La torche à plasma 1 et la buse à oxygène 6 peuvent être deux sous-ensembles indépendants l'un de l'autre ou regroupés dans un même ensemble par montage mécanique.
Le fonctionnement de l'installation de la figure 1 a peut être entièrement automatisé.

Une telle installation automatisée comprend alors un ensemble torche /buse, dans lequel la torche 1 à plasma est dédiée au préchauffage du matériau et la buse 6 formant tête de découpe est dédiée au coupage du matériau.

En outre, une installation automatisée comprend aussi :
- au moins un axe doté d'au moins un actionneur (non représentés) de déplacement de l'ensemble torche/buse, et d'organes périphériques selon des directions X et/ou Y permettant de décrire une trajectoire de coupe préprogrammée :
   - un axe doté d'un actionneur de déplacement, supportant l'ensemble torche/buse, à débattement vertical selon l'axe (Zb-Zb) pour pouvoir ajuster la distance séparant l'ensemble torche/buse de la surface supérieure de la pièce 5 à chauffer et à couper de manière à ce que le point de convergence des jets gazeux issus de la buse 6 et de la torche 1 évolue en permanence dans un plan sensiblement confondu avec le plan formé par la surface supérieure de la pièce à chauffer et à couper ;
   - un axe doté d'un actionneur de déplacement, supportant la torche 1, à débattement oblique selon l'axe (Zt-Zt) pour ajuster la longueur du jet de plasma 7 de la face d'extrémité de la tuyère 3 au point de convergence des jets issus de la buse 6 et de la torche 1 ;
   - un directeur de commande (non représenté) comprenant des moyens de programmation des déplacements des axes en position et en vitesse, des points d'amorçage et d'extinction du procédé de coupe, par exemple une commande numérique et des moyens de gestion automatique des séquences de fonctionnement de l'ensemble torche/buse, des organes de sectionnement des fluides et de commande de la source de courant, des temporisateurs divers...

L'allumage de de la torche à plasma de la figure 1 a se fait de la façon suivante.

La source de courant 4 est mise sous tension, le contact 4c est fermé, et un gaz plasmagène, tel de l'argon est injecté a une pression appropriée dans l'espace 1a dans la torche 1. Une source auxiliaire de haute tension/haute fréquence (non représentée) est alors activée, provoquant le jaillissement d'une étincelle entre l'extrémité de l'électrode 2, 2a et le fond de la tuyère 3

De manière alternative, il est aussi possible de réaliser une mise en contact électrique de l'électrode et la tuyère, c'est-à-dire une mise en court-circuit, par un mouvement relatif en rapprochement de ces éléments l'un par rapport à l'autre, suivi de leur séparation par un mouvement en sens opposé. Lors de la rupture du court-circuit, une étincelle jaillit entre l'extrémité de l'électrode 2, 2a et le fond de la tuyère 3.

Dans tous les cas, le chemin électrique créé par l'étincelle ainsi obtenue, provoque une ionisation partielle et locale du gaz entre électrode 2 et tuyère 3, ce qui permet un passage de courant et la formation d'un arc électrique dont, sous la pression dynamique du débit de gaz plasmagène, les pieds cathodique et anodique viennent rapidement se fixer, pour le premier, au centre de l'extrémité de l'insert émissif 2a et, pour le second, en un point de la surface latérale de l'orifice 3a de la tuyère 3.

Un arc plasma, dit arc pilote, s'établit alors de façon stable en formant un jet fin de gaz partiellement ionisé et à haute température, s'allongeant à l'extérieur de l'orifice 3a de la tuyère 3, c'est-à-dire en direction de la pièce métallique 5.

Ensuite, on observe alors un transfert de l'arc électrique à la pièce 5 métallique et le commencement du chauffage localisé de cette pièce 5.

Cependant, si la torche 1 n'est pas déjà prépositionnée, celle-ci est alors déplacée selon l'axe (Zt-Zt) en direction de la pièce 5 jusqu'à ce qu'une région suffisamment ionisée de la colonne d'arc pilote soit au contact de la surface supérieure de ladite pièce 5 et qu'un courant électrique circule entre l'électrode 2, 2a et la dite pièce 5.

Un détecteur 13, du type à relais d'intensité, disposé sur la ligne annexe 4b reliant le pôle positif (+) de la source de courant 4 et la pièce 5, envoi un signal, attestant du passage d'un courant électrique, en direction de l'actionneur de l'axe (Zt-Zt) de mouvement de la torche 1 de la source de cpourant 4, des auxiliaires électriques de la source de courant 4 et des divers organes de gestion des gaz alimentant la torche 1 et il se produit alors:
- un arrêt du déplacement de la torche 1 vers la pièce 5 ;
- une ouverture du contact 4c ,
- un changement de gaz plasmagène pour passer du gaz pilote, par exemple l'argon, au gaz de chauffe, c'est-à-dire au gaz oxydant ;
- une augmentation de l'intensité du courant jusqu'à une valeur préétablie correspondant aux conditions de chauffage prédéfinies par l'opérateur de la pièce 5 ;
- un chauffage de la pièce 5 jusqu'à élévation de la température, dans la zone d'impact 8 de l'arc plasma 7 sur la pièce 5, à une valeur sensiblement égale à 1300°C. Le temps de chauffe (de l'ordre de quelques 1/10^{ème} de secondes) est préprogrammé en relation avec l'intensité du courant débité dans l'arc plasma et éventuellement la masse de la pièce 5.

Ensuite, on opère un amorçage de la réaction de combustion du fer constituant la pièce 5 à couper et un perçage de cette pièce 5, ainsi que schématisé sur la figure 1b.

Pour ce faire, à la fin du temps de chauffe préprogrammé, l'arc plasma 7 de chauffe étant maintenu, un ordre (en 213) est envoyé à un organe de sectionnement 14, par exemple une électrovanne placée sur la ligne d'alimentation en oxygène de coupe de la buse 6, pour commander son ouverture selon un mode d'ouverture tout-ou-rien ou progressif.

Un débit d'oxygène 19 est alors canalisé vers l'entrée 6a de la buse 6 formant ainsi un jet ou flux 9a d'oxygène sous pression sortant par l'orifice calibré 6b de la buse 6.

Le jet d'oxygène 9a vient frapper la zone 8 préchauffée à une température d'environ 1300°C et déclenche alors une réaction d'oxydation conduisant à la combustion du fer contenu dans cette zone 8 de la pièce 5.

La réaction de combustion étant fortement exothermique, celle-ci se propage de proche en proche par combustion/fusion du matériau sur toute l'épaisseur de la pièce 5 jusqu'à ce que le jet d'oxygène 9a débouche à la face inférieure de la pièce 5 et débite librement par le passage 10 ainsi percé de forme générale approximativement cylindrique.

Le temps de perçage est un paramètre préprogrammé tenant compte, notamment, de l'épaisseur de la pièce 5 et du débit du jet d'oxygène 9a.

A la fin du temps de perçage préprogrammé un ordre est délivré aux actionneurs d'axe X et/ou Y, par le directeur de commande, afin d'exécuter une trajectoire de découpe préprogrammée.

La réaction d'oxydation se propage alors radialement, sur toute l'épaisseur de la pièce, par rapport au jet d'oxygène et forme un front de saignée sensiblement en forme de demi-cylindrique.

La vitesse de déplacement de l'ensemble torche/buse est maintenue sensiblement constante pendant le temps de la découpe et est choisie de manière à ce qu'il se produise un équilibre permanent entre la production de matériau fondu et son expulsion hors de la saignée de coupe, du côté de la surface inférieure de la pièce, sous l'effet de la pression du gaz de coupe.

Lors de la mise en mouvement de l'ensemble torche/buse, un système de palpage, garantissant le maintien du point de convergence des jets d'oxygène 9a et de plasma 7, dans le plan supérieur de la pièce 5 en cours de découpe, est mis en action.

Dans un espace de temps sensiblement identique, un ordre peut être délivré à la source de courant 4 pour abaisser l'intensité du courant dans l'arc plasma et l'amener à une valeur minimale suffisante pour entretenir la réaction d'oxydation dans la saignée de coupe.

A la fin de la découpe de la pièce, c'est-à-dire en fin d'exécution du programme, le directeur de commande délivre simultanément un ordre d'arrêt des mouvements d'axes X et/ou Y, un ordre à la source de courant 4 pour couper le courant alimentant la torche 1 à plasma, un ordre de fermeture de l'organe de sectionnement 14 du débit d'oxygène de coupe, puis avec délai ou non, un ordre de fermeture de l'organe de sectionnement du débit de gaz plasmagène alimentant la torche 1 et éventuellement un ordre de relevage de l'ensemble torche/buse par l'axe motorisé selon (Zt-Zt).

On obtient alors une extinction de la torche et donc un arrêt du coupage.

Selon les besoins, un enchaînement de découpe peut être exécuté en positionnant successivement, par programme ou par commande manuelle, l'ensemble torche/buse sur un ou de nouveaux points de départ d'une ou plusieurs pièces à découper, et en exécutant, pour chacune d'elles, la suite des séquences décrites ci-avant.

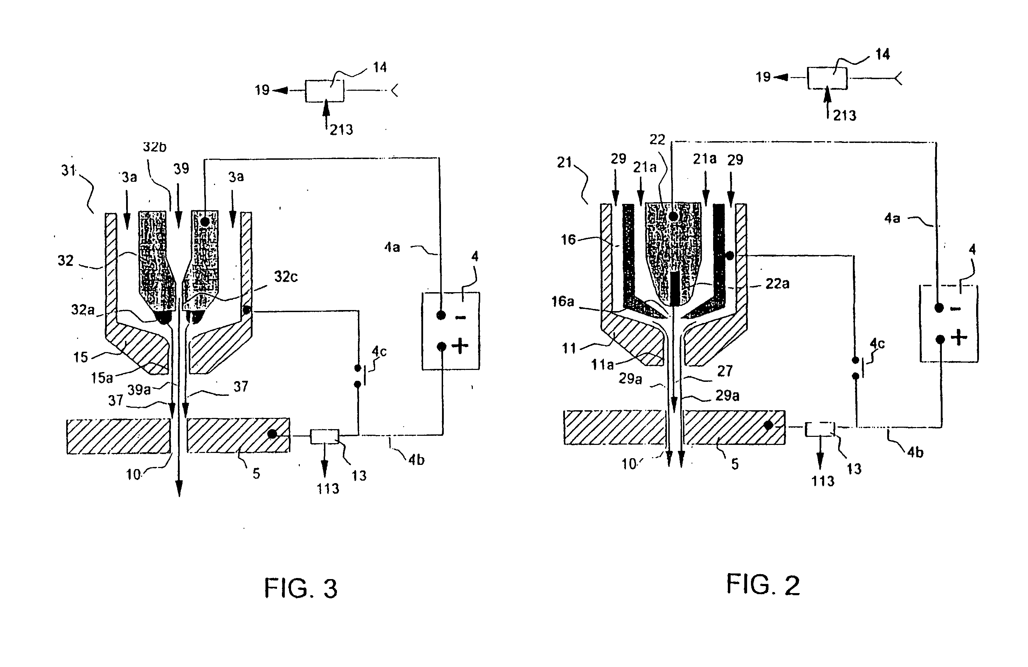

La figure 2 représente un schéma d'une installation du type à jets coaxiaux, qui n'est pas couvert par les revendications 9 et 10.

Le mode de fonctionnement de l'installation de la figure 2 étant tout-à-fait similaire à celui de l'installation des Figures 1 a et 1b, celui-ci ne sera pas redétaillé ci-après.

Cependant, comme on peut le voir sur la figure 2, une différence majeure réside en la non-convergence des jets de plasma 27 et de gaz 29a.

En effet, une installation selon l'invention du type à jets coaxiaux se caractérise par une coaxialité des jets 27 et 29a et donc par une absence de nécessité du positionnement du point de convergence par rapport au plan supérieur de la pièce 5 à couper.

En conséquence, un seul axe, à débattement vertical, doté d'un actionneur de déplacement des systèmes de torche 21 et 31 est nécessaire pour amener ces dernières à distance convenable pour opérer le transfert d'arc plasma à la pièce 5 à découper et pour en assurer le maintien à distance sensiblement constante, par asservissement à un système de palpage, pendant les opérations de découpe.

Ainsi que montre sur la figure 2, une installation selon l'invention du type à jets coaxiaux comprend une torche 21 à double-injection et double-tuyère, laquelle torche 21 comporte :
- une électrode 22 de forme générale de révolution, réalisée en cuivre ou alliage de cuivre, munie à son extrémité d'un élément émissif 22a réalisé, par exemple, en hafnium ou alliage d'hafnium ;
- une première tuyère 16 de forme générale de révolution, réalisée en cuivre ou en alliage de cuivre, munie d'un orifice calibré 16a dont l'axe est en coincidence avec l'axe de l'électrode 2 et de l'insert émissif 2a. Une section circulaire délimitée, d'une part, par la paroi externe de l'électrode 22 et, d'autre part, par la paroi interne de la tuyère 16 forme un passage 21a pour l'injection d'un gaz plasmagène, de préférence un gaz sélectionné parmi les gaz oxydants. notamment de l'oxygène. Un espace est ménagé entre l'extrémité de l'électrode 22 et le fond de la tuyère 16 permettant au gaz de s'écouler par l'orifice 16a de la tuyère 16.
- une deuxième tuyère 11, de forme générale de révolution, réalisée en cuivre ou en alliage de cuivre, et munie d'un orifice calibré 11 a dont l'axe est en coincidence avec l'axe de l'électrode 22 et de l'insert émissif 22a, et avec l'axe de l'orifice 11a de la première tuyère 16 Une section circulaire délimitée, d'une part, par la paroi externe de la première tuyère 16 et, d'autre part, par la paroi interne de la deuxième tuyère 11 forme un passage 29 pour l'injection d'un gaz de coupe, de préférence de l'oxygène Un deuxième espace est ménagé entre l'extrémité de la première tuyère 16 et le fond de la deuxième tuyère 11 permettant au gaz oxydant de s'écouler par l'orifice 11a de la tuyère 11. En outre, lesdits orifices 16a et 11a appartenant respectivement aux tuyères 16 et 11 peuvent, eux aussi, comporter des aménagements de profil, notamment une stucture de type convergent/col calibré/divergent.
- une source de courant continu 4 est, comme dans le mode de réalisation précédent, connectée, d'une part, par son pôle négatif (-) et au moyen d'un câble électrique 4a à l'électrode 22 formant cathode dans la torche 21 et, d'autre part, par son pôle positif (+) et au moyen d'un câble électrique 4b à la pièce à chauffer/découper 5 formant anode Une liaison électrique annexe est établie entre le câble 4b et les tuyères 16 et 11, via un contact 4c Dans une phase transitoire d'allumage de la torche à plasma 21, le contact 4c est fermé, mettant ainsi les tuyères 16 et 11 au potentiel positif de la source 4 et permettant l'allumage d'un premier arc, dit arc pilote, établi entre l'électrode 22, 22a et la tuyère 11, voire la tuyère 16. Des moyens classiques tels qu'une source auxiliaire haute fréquence ou un dispositif de mise en court-circuit temporaire de l'électrode 22 et de la tuyère 16, (non représentés), sont utilisés pour initialiser l'arc pilote. Afin de ne pas détériorer le canal 16a de la tuyère 16 et le canal 11a de la tuyère 11, un gaz non oxydant, tel de l'argon est préférentiellement injecté, en 21a, durant cette phase d'allumage de la torche tant que l'arc n'est pas effectivement transféré à la pièce 5.

En cours de fonctionnement, le jet d'arc plasma de chauffe 27 est gainé par un flux d'oxygène de coupe 29a formant, lors de son déplacement suivant une trajectoire coupe prédéfinie, par combustion/fusion une saignée 10 dans la pièce de travail 5.

Par ailleurs, la figure 3 représente un schéma d'une installation du type à double-injection et cathode creuse, qui n'est pas couvert par les revendications 9 et 10.

Comme on le voit sur la figure 3, selon ce mode de réalisation, la torche à plasma 31 comporte :
- une électrode 32 de forme générale de révolution, réalisée en cuivre ou alliage de cuivre, et munie à son extrémité d'un élément émissif 32a réalisé, par exemple, en hafnium, alliage d'hafnium ou autres matériaux et alliages de matériaux, lequel élément émissif 32a a une forme d'anneau dont l'axe de révolution est confondu avec l'axe de l'électrode 32 Un premier orifice 32b d'alimentation en gaz de coupe, de l'oxygène de préférence, est pratiqué à l'extrémité supérieure de l'électrode 32, selon son axe de révolution. Un deuxième orifice calibré 32c, de section plus faible, est percé dans la partie inférieure de l'électrode 32 selon son axe de révolution ; les orifices 32b et 32c étant mis en communication par un alésage conique dont a grande base est de diamètre environ égal au diamètre de l'orifice 32b et la petite base de diamètre environ égal au diamètre de l'orifice 32c.
- une tuyère 15, de forme générale de révolution, réalisée en cuivre ou en alliage de cuivre, munie d'un orifice calibré 15a dont l'axe est en coïncidence avec l'axe de l'électrode 32 et de l'insert émissif 32a Une section circulaire délimitée, d'une part, par la paroi externe de l'électrode 32 et, d'autre part, par la paroi interne de la tuyère 15 forme un passage 31a pour l'injection d'un gaz plasmagène, sélectionné parmi les gaz oxydants, de préférence de l'oxygène. Un espace est ménagé entre l'extrémité de l'électrode 32 et le fond de la tuyère 15 permettant au gaz de s'écouler par l'orifice 15a de la tuyère 15. En outre, lesdits orifices 32c et 15a appartenant respectivement à l'électrode 32 et à la tuyères 15 peuvent, eux aussi, comporter des aménagements de profil, notamment une stucture de type convergent/col calibré/divergent.
- une source de courant continu 4 est connectée, d'une part, par son pôle négatif (-) et au moyen d'un câble électrique 4a à l'électrode 32 formant cathode dans la torche 31 et, d'autre part, par son pôle positif (+) et au moyen d'un câble électrique 4b à la pièce 5 à chauffer/découper formant anode Une liaison électrique annexe est établie entre la ligne 4b et la tuyère 15, via un contact 4c. Dans une phase transitoire d'allumage de la torche à plasma 31, le contact 4c est fermé, mettant ainsi la tuyère 15 au potentiel positif de la source 4 et permettant ainsi l'allumage d'un arc pilote entre l'électrode 32. 32a et la tuyère 15. Comme précédemment, des moyens classiques sont utilisés pour initialiser cet arc pilote.

De même, afin de ne pas détériorer le canal 15a de la tuyère 15, un gaz non oxydant, tel de l'argon, est préférentiellement injecté durant cette phase d'allumage de la torche et ce, tant que l'arc n'est pas effectivement ransféré à la pièce 5.

Dans ce cas, en cours de fonctionnement, le flux d'oxygène de coupe 39a est gainé par le jet de plasma 37 et forme par combustion/fusion une saignée 10 dans la pièce de travail 5 selon une trajectoire souhaitée.

Il va de soi que les torches 1, 21 et 31 et éventuellement la buse 6, décrites ci-avant et montrées sur les figures 1a, 1b, 2 et 3, comportent des aménagements internes, non représentés ici, permettant la circulation d'un fluide de refroidissement, telle que de l'eau déminéralisée, pour refroidir de açon efficace, en particulier, les électrodes et les tuyères par convection forcée, c'est-à-dire par échange thermique.

Une installation selon la présente invention peut être appliquée à la réalisation de découpes rectilignes ou de formes plus complexes dans des tôles planes ou des volumes notamment de volumes réalisés à partir de tôles planes soudées entre elles ou de tôles mises en forme par déformation. dont la composition chimique les apparente aux aciers de construction.

Selon le cas, l'installation de découpe automatique selon l'invention peut être de type X-Y, de type X-Y-Z ou un robot automatisé.

Cepenaant, l'installation de découpe peut aussi être de type manuel, c'est-à-dire que, dans ce cas, la torche est tenue à la main par l'opérateur.

Une telle installation peut être utilisée pour effectuer des coupes à bords droits ou chanfreinés notamment pour la réalisation de pièces constitutives d'ensembles mécaniques ou mécano-soudés.

Il convient, en outre, de souligner que, si dans ce qui précède, le procédé d'oxycoupage avec torche à arc plasma selon l'invention est décrit comme un procédé de découpe des aciers de construction, à productivité plus grande que l'oxycoupage à chauffe oxy-combustible classique, celui-ci peut aussi dans les mêmes domaines d'application. être considéré comme un procédé de coupage plasma sous oxygène à faible énergie électrique.

En effet, dans un procédé de coupage plasma sous oxygène classique qui opère principalement par fusion du matériau, sur toute son épaisseur, par l'effet thermique de l'arc plasma et l'expulsion du métal en fusion par l'effet cinétique du jet de gaz plasmagène, la principale source thermique provient du flux d'électrons distribué à l'anode, c'est-à-dire la pièce à couper.

En d'autres termes, c'est principalement l'intensité du courant dans arc plasma qui détermine la capacité de découpe.

Dans le procédé d'oxycoupage à arc plasma selon l'invention, l'arc plasma ne sert qu'à chauffer en surface la pièce à découper pendant la séquence d'amorçage précédent la réaction de combustion du fer sous l'effet du jet d'oxygène de coupe, puis ensuite de source d'appoint de chaleur pour entretenir cette réaction pendant toute la durée du processus de découpe, la source principale de chaleur étant créée par la réaction exothermique d'oxydation du fer.

A titre d'exemple non limitatif, l'intensité (en ampères) du courant d'arc nécessaire à la coupe d'une tôle d'acier E24 ayant une épaisseur de 12 mm est de 120A en coupage par jet d'un plasma oxydant classique, mais seulement de 30 A en oxycoupage-plasma selon l'invention.

Or, il est connu que, dans le procédé de coupage plasma sous oxygène classique, l'intensité du courant d'arc est l'un des facteurs importants d'usure des cathodes, généralement réalisées en hafnium.

Dans l'état de l'art actuel, et pour ces raisons, les intensités mises en oeuvre industriellement ne dépassent pas 250 à 300 A, ce qui permet de découper de épaisseurs d'acier de construction d'environ 30 mm.

Le procédé d'oxycoupage plasma selon l'invention permet donc d'atteindre des épaisseurs coupées très nettement supérieures et ce, sans pour autant dépasser les limites actuelles d'intensités de courant, c'est-à-dire en conservant des durées de vie de cathode acceptables où à l'inverse permettre de couper des épaisseurs plus faibles avec des intensités de courant d'arc très inférieures à celles nécessités par les procédés de coupage plasma sous oxygène classiques et donc ainsi obtenir des durées de vie de cathode beaucoup plus grandes.

## Revendications

1. Procédé d'oxycoupage-plasma d'au moins une pièce métallique (5) contenant au moins un matériau ferreux, en particulier du fer, dans lequel :
(a) on réalise un préchauffage localisé d'une zone d'amorçage (8) de la pièce métallique (5) à couper en soumettant ladite zone d'amorçage (8) à au moins un jet de plasma (7, 27, 37);
(b) on soumet au moins une partie de la zone d'amorçage (8) au moins préchauffée à l'étape (a) à au moins un flux gazeux oxydant (9a, 29a, 39a) à une pression supérieure à 10⁵ Pa ;
(c) on réalise au moins un perçage (10) selon toute l'épaisseur de la pièce (5) à découper, dans au moins une partie de la zone d'amorçage (8) soumise au moins au préchauffage par jet de plasma (7, 27, 37) selon l'étape (a), par fusion et/ou par combustion du matériau ferreux contenu dans ladite pièce métallique (5) par réaction dudit matériau ferreux avec ledit flux gazeux oxydant (9a, 29a, 39a) et/ou ledit jet de plasma (7, 27, 37);
(d) on déplace le jet de plasma (7, 27, 37) et le flux gazeux oxydant (9a, 29a, 39a) suivant une trajectoire de coupe pour réaliser au moins une portion d'une saignée de coupe à travers ladite pièce (5) par fusion et/ou par combustion du matériau ferreux contenu dans ladite pièce métallique (5) au moins par réaction dudit matériau ferreux avec au moins ledit flux gazeux oxydant (9a, 29a, 39a).

2. Procédé selon la revendication 1, **caractérisé en ce que** le perçage (10) réalisé à l'étape (c) est obtenu par réaction dudit matériau ferreux avec au moins ledit flux gazeux oxydant (9a, 29a, 39a).

3. Procédé selon la revendication 1, **caractérisé en ce que** le perçage (10) réalisé à l'étape (c) est obtenu par réaction dudit matériau ferreux avec ledit jet de plasma (7, 27, 37).

4. Procédé selon l'une des revendications 1 à 3, **caractérisé en ce que** la zone d'amorçage est préchauffée à l'étape (a) à une température comprise entre 1000°C et 1500°C, de préférence de 1200°C à 1400°C, de préférence encore de l'ordre de 1300°C à 1350°C et/ou **en ce que** la durée du préchauffage est comprise entre 0.001 et 2 secondes, de préférence de 0.01 et 1.5 seconde.

5. Procédé selon l'une des revendications 1 à 4, **caractérisé en ce que** le flux gazeux oxydant (9a, 29a, 39a) est de l'oxygène ou un mélange gazeux contenant de l'oxygène, notamment de l'air ou de l'air enrichi en oxygène.

6. Procédé selon l'une des revendications 1 à 5, **caractérisé en ce que**, durant la coupe, chaque portion de la trajectoire de coupe est soumise au jet de plasma (7, 27, 37) et au flux gazeux oxydant (9a, 29a, 39a), l'essentiel de la fusion et/ou de la combustion du matériau selon ladite trajectoire de coupe étant assuré principalement par réaction du fer avec le flux gazeux oxydant (9a, 29a, 39a).

7. Procédé selon l'une des revendications 1 à 6, **caractérisé en ce que** le jet de plasma (7, 27, 37) et le flux gazeux oxydant (9a, 29a, 39a) sont délivrés coaxialement ou de manière convergente.

8. Procédé selon l'une des revendications 1 à 7, **caractérisé en ce que** la saignée de coupe est réalisée par déplacement à une vitesse de coupe approximativement constante desdits jet de plasma (7, 27, 37) et flux gazeux oxydant (9a, 29a, 39a) relativement à la pièce métallique (5).

9. Installation d'oxycoupage-plasma susceptible d'être utilisée pour découper une pièce métallique (5) contenant au moins un matériau ferreux, en particulier du fer, comprenant au moins :
- une torche (1) de préchauffage par jet de plasma (7) d'axe (Zt-Zt) pour délivrer au moins un jet de plasma (7) et une buse (6) de distribution de flux gazeux d'axe (Zb-Zb) pour délivrer au moins un flux gazeux ; l'axe (Zb-Zb) de ladite buse (6) de distribution et l'axe (Zt-Zt) de ladite torche (1) de préchauffage étant dirigés vers un point de convergence de manière à ce que les jets gazeux issus de la buse (6) et de la torche (1) convergent vers ledit point de convergence, de préférence le point de convergence est situé approximativement au niveau ou à proximité de la surface supérieure de la pièce métallique (5);
- des moyens bâti-support portant ladite torche (1) de préchauffage par jet de plasma et/ou ladite buse (6) de distribution ;
- des moyens de déplacement, de préférence motorisés, pour déplacer, de préférence approximativement en synchronisme, la torche (1) plasma et la buse (6) de distribution relativement à au moins une pièce (5) métallique à couper ; et
- des moyens de pilotage, en particulier par programmation, permettant de commander au moins les moyens de déplacement et/ou au moins un cycle de fonctionnement de la torche (1);
et dans laquelle la torche plasma (1) et la buse (6) de distribution sont d'axes convergents et non-confondus.

10. Installation selon la revendication 9, **caractérisée en ce que** la torche à plasma (1) est de type mono flux ou multi-flux.

## Patentansprüche

1. Verfahren zum Plasmabrennschneiden mindestens eines Metallstücks (5), das mindestens ein Eisenmaterial enthält, insbesondere Eisen, wobei:
a) ein örtliches Vorheizen einer Zündzone (8) des zu schneidenden Metallstücks (5) vorgenommen wird, indem die Zündzone (8) mindestens einem Plasmastrahl (7, 27, 37) ausgesetzt wird;
b) mindestens ein Teil der Zündzone (8), die mindestens in Schritt a) vorgeheizt wurde, mindestens einem Oxidationsgasstrom (9a, 29a, 39a) bei einem Druck von mehr als 10⁵ Pa ausgesetzt wird;
c) mindestens eine Durchbohrung (10) über die gesamte Dicke des auszuschneidenden Stückes (5) in mindestens einem Teil der Zündzone (8), die mindestens dem Vorheizen durch Plasmastrahl (7, 27, 37) nach Schritt a) ausgesetzt wurde, durch Verschmelzen und/oder durch Verbrennen des Eisenmaterials, das in dem Metallstück (5) enthalten ist, durch eine Reaktion des Eisenmaterials mit dem Oxidationsgasstrom (9a, 29a, 39a) und/oder dem Plasmastrahl (7, 27, 37) ausgeführt wird;
d) der Plasmastrahl (7, 27, 37) und der Oxidationsgasstrom (9a, 29a, 39a) entlang eines Schneidwegs verschoben werden, um mindestens einen Teil einer Schnittfuge über das Stück (5) durch Verschmelzen und/oder Verbrennen des Eisenmaterials, das in dem Metallstück (5) enthalten ist, mindestens durch eine Reaktion des Eisenmaterials mit mindestens dem Oxidationsgasstrom (9a, 29a, 39a) auszubilden.

2. Verfahren nach Anspruch 1, **dadurch gekennzeichnet, dass** die in Schritt c) ausgebildete Durchbohrung (10) durch die Reaktion des Eisenmaterials mit dem mindestens einen Oxidationsgasstrom (9a, 29a, 39a) erreicht wird.

3. Verfahren nach Anspruch 1, **dadurch gekennzeichnet, dass** die in Schritt c) ausgebildete Durchbohrung (10) durch die Reaktion des Eisenmaterials mit dem Plasmastrahl (7, 27, 37) erreicht wird.

4. Verfahren nach einem der Ansprüche 1 bis 3, **dadurch gekennzeichnet, dass** die Zündzone in Schritt a) auf eine Temperatur vorgeheizt wird, die zwischen 1000 °C und 1500 °C, bevorzugt zwischen 1200 °C und 1400 °C, weiter bevorzugt zwischen etwa 1300 °C und 1350 °C, liegt, und/oder dass die Vorheizdauer zwischen 0,001 und 2 Sekunden, bevorzugt zwischen 0,01 und 1,5 Sekunden, liegt.

5. Verfahren nach einem der Ansprüche 1 bis 4, **dadurch gekennzeichnet, dass** der Oxidationsgasstrom (9a, 29a, 39a) aus Sauerstoff oder einem Sauerstoff enthaltenden gasförmigen Gemisch, insbesondere aus Luft oder mit Sauerstoff angereicherter Luft, besteht.

6. Verfahren nach einem der Ansprüche 1 bis 5, **dadurch gekennzeichnet, dass** während des Schneidens jeder Teil des Schneidwegs dem Plasmastrahl (7, 27, 37) und dem Oxidationsgasstrom (9a, 29a, 39a) unterzogen wird, wobei der Großteil der Verschmelzung und/oder der Verbrennung des Materials entlang des Schneidwegs hauptsächlich durch die Reaktion des Eisens mit dem Oxidationsgasstrom (9a, 29a, 39a) sichergestellt wird.

7. Verfahren nach einem der Ansprüche 1 bis 6, **dadurch gekennzeichnet, dass** der Plasmastrahl (7, 27, 37) und der Oxidationsgasstrom (9a, 29a, 39a) koaxial oder zusammenlaufend abgegeben werden.

8. Verfahren nach einem der Ansprüche 1 bis 7, **dadurch gekennzeichnet, dass** die Schnittfuge durch eine Verschiebung bei einer ungefähr konstanten Schnittgeschwindigkeit des Plasmastrahls (7, 27, 37) und des Oxidationsgasstroms (9a, 29a, 39a) im Verhältnis zu dem Metallstück (5) ausgebildet wird.

9. Anlage zum Plasmabrennschneiden, die verwendbar ist, um ein Metallstück (5) auszuschneiden, das mindestens ein Eisenmaterial, insbesondere Eisen, beinhaltet, umfassend:
- einen Brenner (1) zum Vorheizen durch einen Plasmastrahl (7) der Achse (Zt-Zt), um mindestens einen Plasmastrahl (7) abzugeben, und eine Düse (6) zum Verteilen eines Gasstroms der Achse (Zb-Zb), um mindestens einen Gasstrom abzugeben; wobei die Achse (Zb-Zb) der Verteilerdüse (6) und die Achse (Zt-Zt) des Vorheizbrenners (1) derart auf einen Brennpunkt ausgerichtet sind, dass die Gasstrahlen aus der Düse (6) und dem Brenner (1) auf den Brennpunkt hin zusammenlaufen, wobei der Brennpunkt sich bevorzugt ungefähr an oder in der Nähe der oberen Fläche des Metallstücks (5) befindet;
- Tragrahmenmittel, die den Brenner (1) zum Vorheizen durch den Plasmastrahl und/oder die Verteilerdüse (6) tragen;
- Verschiebungsmittel, bevorzugt motorisiert, um den Plasmabrenner (1) und die Verteilerdüse (6) im Verhältnis zu mindestens einem auszuschneidenden Metallstück (5) bevorzugt ungefähr synchron zu verschieben; und
- Steuermittel, um mindestens die Verschiebungsmittel und/oder mindestens einen Betriebszyklus des Brenners (1) insbesondere durch Programmierung zu steuern;
und wobei der Plasmabrenner (1) und die Verteilerdüse (6) jeweils Achsen aufweisen, die ineinander übergehend und nicht zusammenlaufend sind.

10. Anlage nach Anspruch 9, **dadurch gekennzeichnet, dass** der Plasmabrenner (1) von der Art mit einem oder mehreren Strömen ist.

## Claims

1. Process for the plasma oxycutting of at least one metal workpiece (5) containing at least one ferrous material, in particular iron, in which:
(a) an ignition region (8) of the metal workpiece (5) to be cut is locally preheated by subjecting the said ignition region (8) to at least one plasma jet (7, 27, 37);
(b) at least part of the ignition region (8) at least preheated in step (a) is subjected to at least one stream of oxidizing gas (9a, 29a, 39a) at a pressure of greater than 10⁵ Pa;
(c) at least one drillhole (10) is made over the entire thickness of the workpiece (5) to be cut, in at least part of the ignition region (8) subjected to at least preheating by plasma jet (7, 27, 37) in step (a), by melting and/or combustion of the ferrous material contained in the said metal workpiece (5) by the reaction of the said ferrous material with the said stream of oxidizing gas (9a, 29a, 39a) and/or the said plasma jet (7, 27, 37);
(d) the plasma jet (7, 27, 37) and the stream of oxidizing gas (9a, 29, 39a) are moved in a cutting path in order to produce at least a portion of a kerf through the said workpiece (5) by melting and/or combustion of the ferrous material contained in the said metal workpiece (5) at least by the reaction of the said ferrous material with at least the said stream of oxidizing gas (9a, 29a, 39a).

2. Process according to Claim 1, **characterized in that** the drillhole (10) produced in step (c) is obtained by the reaction of the said ferrous material with at least the said stream of oxidizing gas (9a, 29a, 39a).

3. Process according to Claim 1, **characterized in that** the drillhole (10) produced in step (c) is obtained by the reaction of the said ferrous material with the said plasma jet (7, 27, 37).

4. Process according to one of Claims 1 to 3, **characterized in that** the ignition region is preheated in step (a) to a temperature of between 1000°C and 1500°C, preferably from 1200°C to 1400°C and even more preferably about 1300°C to 1350°C and/or **in that** the preheating time is between 0.001 and 2 seconds, preferably between 0.01 and 1.5 seconds.

5. Process according to one of Claims 1 to 4, **characterized in that** the stream of oxidizing gas (9a, 29a, 39a) is oxygen or a gas mixture containing oxygen, especially air or oxygen-enriched air.

6. Process according to one of Claims 1 to 5, **characterized in that**, during cutting, each portion of the cutting path is subjected to the plasma jet (7, 27, 37) and to the stream of oxidizing gas (9a, 29a, 39a), most of the melting and/or combustion of the material in the said cutting path being essentially provided by the reaction of iron with the stream of oxidizing gas (9a, 29a, 39a).

7. Process according to one of Claims 1 to 6, **characterized in that** the plasma jet (7, 27, 37) and the stream of oxidizing gas (9a, 29a, 39a) are delivered coaxially or convergently.

8. Process according to one of Claims 1 to 7, **characterized in that** the kerf is produced by moving the said plasma jets (7, 27, 37) and the said stream of oxidizing gas (9a, 29a, 39a) at an approximately constant cutting rate, relative to the metal workpiece (5).

9. Plasma-oxycutting unit that can be used to cut a metal workpiece (5) containing at least one ferrous material, in particular iron, comprising at least:
- a plasma jet (7) preheating torch (1) of axis (Zt - Zt) for delivering at least one plasma jet (7) and a gas stream delivery nozzle (6) of axis (Zb - Zb) for delivering at least one stream of gas; the axis (Zb - Zb) of the said delivery nozzle (6) and the axis (Zt - Zt) of the said preheating torch (1) both being directed towards a point of convergence such that the gas jets emanating from the nozzle (6) and from the torch (1) converge on the said point of convergence, preferably the point of convergence lying approximately at or near the upper surface of the metal workpiece (5);
- support-frame means supporting the said plasma jet preheating torch (1) and/or the said delivery nozzle (6);
- movement means, preferably motorized, for moving, preferably in approximate synchronism, the plasma torch (1) and the delivery nozzle (6) relative to at least one metal workpiece (5) to be cut; and
- control means, in particular programmed control means, used for controlling at least the movement means and/or at least one operating cycle of the torch (1);
and in which the plasma torch (1) and the delivery nozzle (6) are of convergent and noncoincident axes.

10. Unit according to Claim 9, **characterized in that in that** the plasma torch (1) is of the single-flow or multiflow type.
